# EUROPÄISCHE PATENTANMELDUNG

(11) **EP 2 916 338 A1**
(43) Veröffentlichungstag der Anmeldung: **09.09.2015**
(21) Anmeldenummer: 15151777.8
(22) Anmeldetag: 20.01.2015
(51) Int. Cl.: H01H 23/00, G07C 9/00

(54) **Elektrisches Installationsgerät mit Bedienteil**

(30) Priorität: 05.03.2014 DE 102014002877
(71) Anmelder: ABB AG, 68309 Mannheim (DE)
(72) Erfinder: Schallenberg, Wolfgang, 40599 Düsseldorf (DE); Wieske, Stefan, 58285 Gevelsberg (DE); Lehnert, Christian, 58239 Schwerte (DE); Fröhling, Marcel, 58579 Schalksmühle (DE); Krummel, Holger, 58515 Lüdenscheid (DE)

(57) **Zusammenfassung**

Die Erfindung bezieht sich auf ein Elektroinstallationsgerät mit wenigstens einem Bedienteil (40) zum Ein- und Ausschalten elektrischer Verbraucher, wobei das Bedienteil (40) mit einem Fingerabdruckleser (30) zur Personalisierung von Schaltvorgängen ausgestattet ist, und der Fingerabdruckleser (30) bei dessen Betätigung bzw. Berührung einen Benutzer durch seine persönlichen Fingerabdruckmerkmale identifiziert und daraus personalisierte Schaltvorgänge generiert.

## Beschreibung

Die Erfindung bezieht sich auf elektrische Installationsgeräte der Gebäudetechnik oder Elektroinstallationstechnik, insbesondere elektronische Schaltgeräte, die mit wenigstens einem Bedienteil ausgestattet sind, nach dem Oberbegriff des Anspruchs 1.

Es sind Fingerabdruckleser, auch Fingersensoren oder Fingerprint-Funktionselemente genannt, bekannt, die mittels optischen-, kapazitiven- und Ultraschallverfahren arbeiten und einen darüber geführten Fingerabdruck durch spezielle Bauteile, beispielsweise ein CCC- (charge-coupled device) Sensorelement, scannen.

In der Elektroinstallationstechnik sind Zutrittssysteme bekannt, welche Fingerabdruckleser für eine Freigabe des Zutrittes in Gebäude oder Gebäudeteile in Abhängigkeit eines bestimmten Benutzers verwenden.

In der DE 20 2006 006 85 U1 ist eine Vorrichtung zum Authentifizieren eines Zutrittsberechtigten und zum Öffnen eines elektronischen Schlosses bzw. einer elektronischen Sicherungseinheit beschrieben, welche einen Biometrie-Sensor, beispielsweise einen Fingersensor, zur Aufnahme eines biometrischen Merkmals nutzt. Bei der Eingabe einer korrekten Biometrie-Information, beispielsweise des Fingerabdruckes eines Zutrittsberechtigten, wird ein Steuersignal generiert und drahtlos an das Schloss übertragen, wodurch sich eine Tür öffnen lässt.

Die gegenwärtig in der Elektroinstallationstechnik eingesetzten Schalter, im Folgenden auch Schaltgeräte genannt, zum Auslösen von Schaltvorgängen besitzen keine Möglichkeit der Personalisierung von Schaltvorgängen im Schalter selbst bei gleichzeitig unveränderten Nutzungsgewohnheiten. Das Ausführen von unterschiedlichen Schaltvorgängen ist von der Benutzung verschiedener Schaltpunkten durch Betätigung einer Wippe (z.B. "schwimmende oder bewegliche Wippe mit Schaltpunkten oben, unten, rechts, links, ...), einer Betätigung mehreren Wippen (z.B. 2-fach Wippe, 2-fach Schalter, ...) oder dem Schalten in Abhängigkeit von äußeren Parametern (z.B. busgebunden, uhrzeitgebunden: ab 09:00 Uhr bis 11:00 Uhr, präsenzgebunden: Raum benutzt/unbenutzt) abhängig.

Der Erfindung liegt daher die Aufgabe zugrunde, ein Elektroinstallationsgerät der Gebäude- oder Elektroinstallationstechnik, insbesondere ein Schaltgerät, anzugeben, welches personalisierte Schaltvorgänge ausführt.

Diese Aufgabe wird gelöst durch ein Elektroinstallationsgerät der Gebäude- oder Installationstechnik, insbesondere ein Schaltgerät, das die im Anspruch 1 angegebenen Merkmale aufweist. Vorteilhafte Ausgestaltungen des erfindungsgemäßen Elektroinstallationsgerätes sind in weiteren Ansprüchen angegeben.

Das erfindungsgemäße Elektroinstallationsgerät umfasst wenigstens ein, vorzugsweise als Wippe ausgestaltetes Bedienteil, welches mit einem Fingerabdruckleser, auch Fingerprintsensor genannt, ausgestattet ist, wobei der Fingerabdruckleser eine Personalisierung von Schaltvorgängen ermöglicht.

Die Schaltfläche des Bedienteiles ist in ihrer ursprünglichen Funktion, beispielsweise dem Ein- und Ausschalten wenigstens eines elektrischen Verbrauchers, zu denen beispielsweise Beleuchtungselemente, elektrische Rollläden, Jalousien, Motoren, Ventilatoren, Raumtemperaturregler, Zutrittsfreigaben und dergleichen zählen, von jedem Benutzer uneingeschränkt nutzbar.

Bei einer Betätigung bzw. Berührung des auf oder im Bedienteil integriertem Fingerabdrucklesers durch den Benutzer identifiziert der Fingerabdruckleser den Benutzer automatisch durch seine persönlichen Fingerabdruckmerkmale und generiert daraus personalisierte Schaltvorgänge, beispielsweise in folgender Ausführung:
a) Fingerabdruck nicht bekannt, oder
b) Fingerabdruck korreliert mit einem gespeicherten Fingerabdruck.

Für die Ausführung a) führt das Schaltgerät den "normalen" Schaltvorgang durch, welcher im Schaltgerät hinterlegt ist bzw. optional als entsprechender Schaltvorgang in einem elektronischen Schaltgerät für diese Situation konfiguriert wurde.

Für die Ausführung b) führt das Schaltgerät einen Schaltvorgang durch, welcher einem zuvor konfigurierten Abdruckmerkmal zugeordnet ist.

Optional ist vorgesehen, die Berechtigung der Benutzer auch zeitlich zu begrenzen, so dass beispielsweise ein außerhalb eines Gebäudes angebrachtes Schaltgerät nur bei Eintritt der Dunkelheit betätigbar ist.

Die als konventionelle elektronische Schalter ausgeführten elektrischen Installationsgeräte können als sogenannte "Monoblock"- Geräte oder als "getrennte" Geräte ausgeführt sein.

Bei den "Monoblock"- Geräten sind das Bedienteil mit den integrierten Fingerprintsensoren und einem als Aktor ausgeführtem Schaltteil in einem Gehäuse, bevorzugt in einem Unterputzgehäuse, untergebracht und werden von einem Design oder Abdeckrahmen abgedeckt.

Bei der Ausführungsform der Schalter als sogenannte "getrennte" Geräte sind die Geräteteile Bedienteil mit integriertem Fingerprintsensoren und Schaltteil durch eine mechanisch/elektronische Schnittstelle, beispielsweise eine Anwenderschnittstelle (AST-Schnittstelle), die zwischen im Bedienteil mit integriertem Fingerprintsensor und dem Schaltteil angeordnet ist, verbunden und kommunizieren miteinander durch ein Bussystem, beispielsweise den KNX- Bus. In der Regel sind diese Geräte aus einem Unterputzeinsatz mit Schaltfunktion, die vorzugsweise mittels eines Relais oder MOSFET's realisiert sind, und einem separat aufsteckbarem Bedienteil, welche durch die elektronische Schnittstelle miteinander verbunden sind, aufgebaut.

Unabhängig von der Gehäuseausprägung als "Monoblock"- Gerät oder "getrenntes" Gerät ist in vorteilhafter Weise die Personalisierung des elektronischen Schalters und daraus resultierend die Generierung seiner Schaltvorgänge mittels der vorgesehenen Fingerprintsensoren immer gegeben.

Die Erkennung und Speicherung des Fingerabdrucks bzw. der zugeordneten Fingerabdruckmerkmale erfolgt in einer ersten Ausführungsvariante im elektronischen Schaltgerät selbst.

Die Fingerabdruckmerkmale werden dabei mit bereits dem elektronischen Schaltgerät abgelegten bzw. gespeicherten Merkmalen der Benutzer verglichen. In Abhängigkeit der vorab genannten Korrelation aus den persönlichen Fingerabdruckmerkmalen des Benutzers und den gespeicherten Merkmalen sind die jeweiligen individuellen Schaltvorgänge des Bedienteiles generierbar.

Das Aktivieren des Fingerprintsensors startet durch spezielles Signal, beispielsweise durch eine Langbetätigung des Schaltgerätes, die Betätigung einer dafür eingerichteten Taste oder der Aktivierung bzw. Deaktivierung einer Verriegelung im Schaltgerät selbst. So sind ein einfaches Starten der Erkennung und gegebenenfalls ein Umkonfigurieren ausführbar.

Ist das erfindungsgemäße Installationsgerät als busfähiger elektronischer Schalter ausgeführt, ist in einer zweiten Ausführungsvariante das Erkennen und Speichern der Fingerabdruckmerkmale über den mit dem Schalter verbundenen Bus aktivierbar und in einer dritten Ausführungsvariante ist der Vergleich der gescannten Fingerabdruckmerkmale über den mit dem Schalter verbundenen Bus in vorteilhafter Weise, beispielsweise auch zu weiteren busfähigen Schaltern, übertragbar.

Vorzugsweise erfolgt die Aktivierung an einem speziell dafür vorgesehenen elektronischen Schalter und/oder an einem externen Fingerprintlesegerät, beispielsweise mittels eines PCs. Anschließend ist die so erhaltene Fingerabdruckinformation zusammen mit dem Schaltvorgang über den Bus in weitere elektronische Schalter in vorteilhafter Weise übertragbar.

Ist der Unterputzeinsatz mit einem Serienschaltteil mit mehr als einem, vorzugsweise zwei, Relais ausgestattet, ist die Personalisierung zur Ansteuerung der Relais in Abhängigkeit von der Erkennung durch den im Bedienteil integrierten Fingerprintsensor beispielsweise wie folgt ausführbar:
- Ansteuerung des ersten Relais für den Fall, dass der gescannte Fingerabdruck nicht bekannt ist, und
- Ansteuerung des zweiten Relais für Fall, dass der gescannte Fingerabdruck mit einem gespeicherten Abdruck korreliert.

Durch Hinzufügen weiterer Relais und/oder Kombinationen der vorhandenen Relais untereinander lassen sich Korrelationen zwischen dem gescannten Fingerabdruckmerkmal und den auszuführenden Schaltvorgängen bilden.

Anhand der in den Zeichnungen dargestellten Ausführungsbeispiele sollen die Erfindung, weitere Ausführungsformen und weitere Vorteile des erfindungsgemäßen Elektroinstallationsgerätes näher beschrieben werden.

Es zeigen:
- **Fig.** 1: eine Ansicht auf ein beispielhaftes erstes Bedienteil des erfindungsgemäßen Elektroinstallationsgerätes,
- **Fig.** 2: eine Ansicht auf ein zweites beispielhaftes Bedienteil des erfindungsgemäßen Elektroinstallationsgerätes,
- **Fig.** 3: eine Ansicht auf ein weiteres beispielhafte Bedienteil des erfindungsgemäßen Elektroinstallationsgerätes,
- **Fig.** 4: ein beispielhaftes Bedienteil des erfindungsgemäßen Elektroinstallationsgerätes, welches als bewegliche Wippe ausgeführt ist,
- **Fig.** 5: eine beispielhafte Ansicht auf ein von einem Abdeckrahmen umgebenes Bedienteil des erfindungsgemäßen Elektroinstallationsgerätes,
- **Fig.** 6: eine beispielhafte Ausführung des Bedienteiles eines busfähigen Schaltgerätes mit mehreren Wippen, und
- **Fig.** 7: ein beispielhaftes Bedienteil des erfindungsgemäßen Elektroinstallationsgerätes, welches als Drehschalter ausgeführt ist.

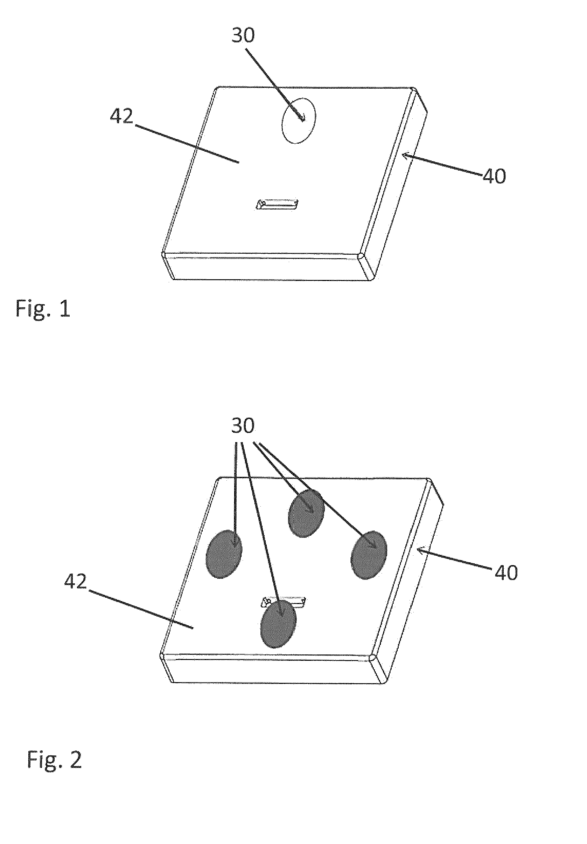

Die **Figur** 1 zeigt eine Ansicht eines Bedienteiles 40 für ein, vorzugsweise als konventioneller Schalter ausgeführtes Elektroinstallationsgerät zum Ein- und Ausschalten elektrischer Verbraucher, wobei ein Fingerprintsensor 30 in das als Wippe ausgeführte Bedienteil 40 integriert ist. Der Fingerprintsensor 30 kann an einer beliebigen Stelle der Wippenoberfläche 42 untergebracht sein.

Der im Bedienteil 40 des erfindungsgemäßen Elektroinstallationsgerätes integrierte Fingerabdruckleser 30 zur Personalisierung von Schaltvorgängen identifiziert bei dessen Betätigung bzw. Berührung einen Benutzer durch seine persönlichen Fingerabdruckmerkmale und generiert daraus entsprechende personalisierte Schaltvorgänge.

Alternativ können auch mehrere Fingerprintsensoren 30 auf der Wippe 40 angeordnet oder in der Wippe 40 integriert sein. Dies zeigt die **Figur** 2 beispielhaft. Die hier dargestellte Wippe 40 weist vier Fingerprintsensoren 30 auf, welche auf den oberen und unteren sowie den linken und rechten Druckbereichen der Wippenoberfläche 42 untergebracht sind. Als personalisierte Funktionen sind alle Gebäudesteuerungsfunktionen möglich, wie beispielsweise das Schalten von Lichtszenen, Raumtemperatureinstellungen, Verschattungseinstellung und/oder Zutrittsfreigaben etc.

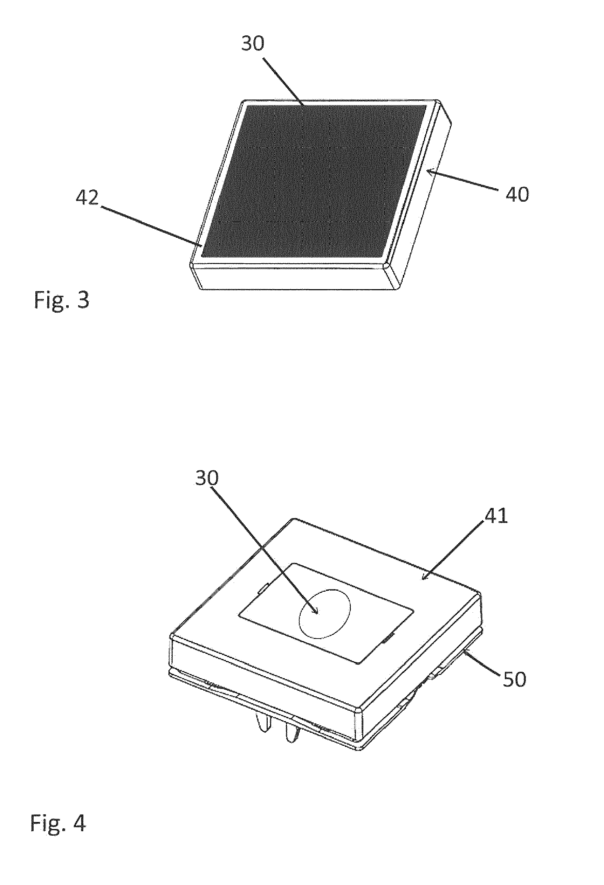

**Figur** 3 zeigt ein weiteres beispielhaftes Bedienteil 40 des Elektroinstallationsgerätes, bei dem der Fingerprintsensor 30 ganzflächig auf der Wippenoberfläche 42 untergebracht ist.

Bei den vorab beschriebenen Elektroinstallationsgeräten gemäß der Figuren 1 bis 3 sind das Bedienteil 40 mit den integrierten Fingerprintsensoren 30 und einem als Aktor ausgeführtem Schaltteil in einem Gehäuse, bevorzugt in einem Unterputzgehäuse, untergebracht und werden von einem Designrahmen abgedeckt.

**Figur** 4 zeigt eine weitere Ausführungsform eines Bedienteiles 40, welches als bewegliche oder schwimmende Wippe 41 ausgeführt und von einem Sockel 50 aufgenommen ist.

Hier ist der Fingerprintsensor 30 feststehend im mittleren Bereich der beweglichen Wippe 41 angebracht.

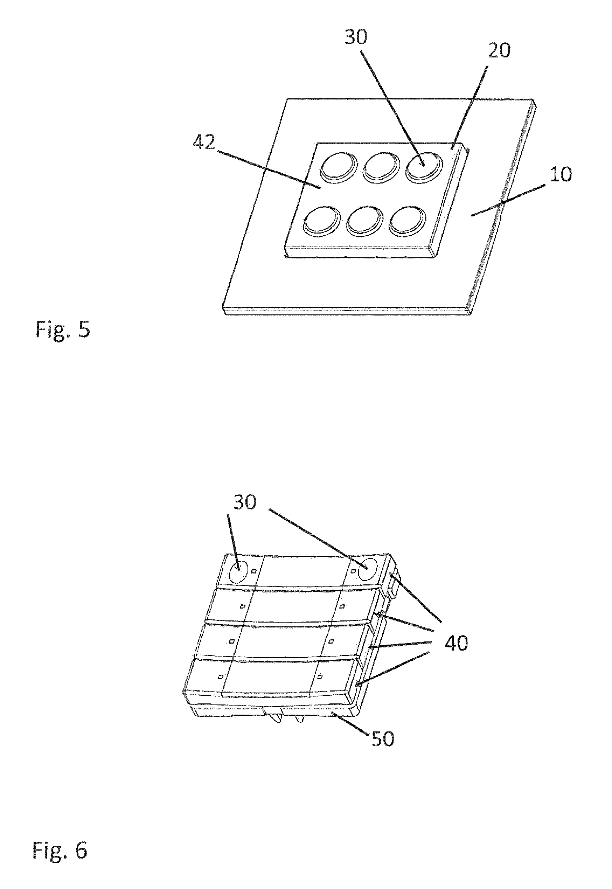

Die **Figur** 5 zeigt eine beispielhafte Ansicht auf ein von einem Abdeckrahmen 10 umgebenes Bedienteil 40 eines als 6-fach Tastsensor ausgeführtes Elektroinstallationsgerät, auf dessen Oberfläche 42 in wenigstens eine der Tasten ein Fingerprintsensor 30 integriert ist.

In der **Figur** 6 ist ein vier Wippen 40 bzw. Tasten aufweisendes Bedienteil gezeigt, wobei eine der Wippen 40 mit Fingerprintsensoren 30 ausgestattet ist. Die Wippen 40 befinden sich auf dem Sockel 50. Das hier gezeigte Bedienteil 40 findet vorzugsweise in busfähigen elektronischen Schaltern, beispielsweise in KNX- Systemen, Verwendung. In busfähigen elektronischen Schaltern sind Bedienteil 40 mit integriertem Fingerprintsensor 30 und Schaltteil, auch Schalteinheit genannt, getrennte Geräte, die über das Bussystem miteinander kommunizieren. Die Erkennung der Personalisierung erfolgt an der Wippe 40, welche den Fingerprintsensor 30 aufweist. Der Vergleich der gescannten Fingerabdruckmerkmale mit einem gespeicherten Abdruck und daraus resultierend die Freigabe bzw. Ausführung der Schaltfunktion kann erfindungsgemäß über die an den Bus angeschlossene Schalteinheit und/oder an mehreren Schalteinheiten erfolgen.

Das Bedienteil 40 mit dem integrierten Fingerprintsensor 30 ist mit der Schalteinheit über eine mechanisch/elektronische Schnittstelle und beispielsweise einen KNX- Bus verbunden.

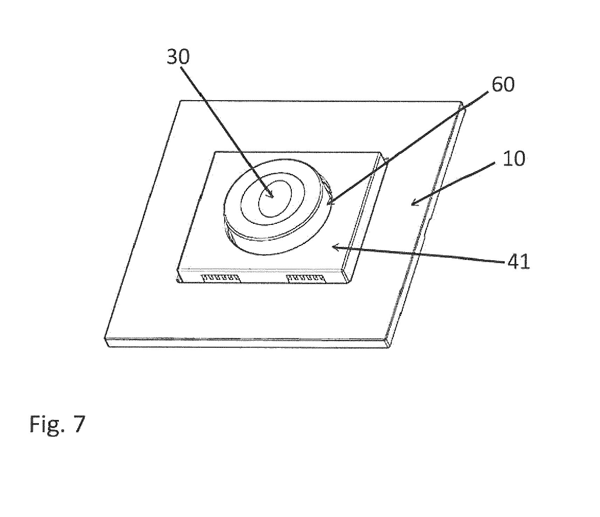

**Figur** 7 zeigt eine Ansicht auf ein als Drehschalter ausgeführtes erfindungsgemäßes Elektroinstallationsgerät, in dessen Designrahmen 10 ein als "schwimmende Wippe" 41 ausgeführtes Bedienteil mit integriertem Drehgriff 60 abdeckt. Das Elektroinstallationsgerät kann beispielsweise ein Raumtemperaturregler sein. Erfindungsgemäß ist auf dem Drehgriff 60 der Fingerprintsensor 30 angeordnet.

### Bezugszeichenliste

- 10: Abdeckrahmen, Designrahmen
- 20: Steg
- 30: Fingerprintsensor, Fingerabdruckleser
- 40: Bedienteil, Wippe
- 41: als schwimmende Wippe ausgeführtes Bedienteil
- 42: Oberfläche der Wippe
- 50: Sockel
- 60: Drehgriff

## Patentansprüche

1. Elektroinstallationsgerät mit wenigstens einem Bedienteil (40) zum Ein- und Ausschalten elektrischer Verbraucher, **dadurch gekennzeichnet, dass** das Bedienteil (40) mit einem Fingerabdruckleser (30) zur Personalisierung von Schaltvorgängen ausgestattet ist, und der Fingerabdruckleser (30) bei dessen Betätigung bzw. Berührung einen Benutzer durch seine persönlichen Fingerabdruckmerkmale identifiziert und daraus personalisierte Schaltvorgänge generiert.

2. Elektroinstallationsgerät nach Anspruch 1, **dadurch gekennzeichnet, dass** das Bedienteil (40) als Wippe, Drehschalter oder als busfähiges elektronisches Schaltgerät ausgestaltet ist.

3. Elektroinstallationsgerät nach Anspruch 1 oder 2, **dadurch gekennzeichnet, dass** die zu schaltenden elektrischen Verbraucher Beleuchtungselemente, elektrische Rollläden, Jalousien, Raumtemperaturregler, Zutrittsfreigaben, Ventilatoren oder Motoren sind.

4. Elektroinstallationsgerät nach einem der vorstehenden Ansprüche, **dadurch gekennzeichnet, dass** eine Erkennung, Speicherung und/oder Aktivierung eines Fingerabdrucks bzw. der zugeordneten Fingerabdruckmerkmale im Schaltgerät selbst ausführbar ist.

5. Elektroinstallationsgerät nach einem der Ansprüche 1 bis 3, **dadurch gekennzeichnet, dass** es als busfähiger elektronischer Schalter ausgeführt ist und das Erkennen und Speichern der Fingerabdruckmerkmale über einen mit dem Schalter verbundenen Bus aktivierbar ist und/oder der Vergleich der gescannten Fingerabdruckmerkmale über den mit dem Schalter verbundenen Bus auch zu weiteren busfähigen Schaltern übertragbar ist.

6. Elektroinstallationsgerät nach einem der vorstehenden Ansprüche, **dadurch gekennzeichnet, dass** es einen Schaltvorgang durchführt, welcher einem zuvor konfigurierten Fingerabdruckmerkmal und einer Zeitangabe zugeordnet ist.

7. Elektroinstallationsgerät nach einem der Ansprüche 2 bis 6, **dadurch gekennzeichnet, dass** der Fingerabdruckleser (30) in das als Wippe ausgeführte Bedienteil (40) an einer beliebigen Stelle oder ganzflächig auf der Wippenoberfläche (42) untergebracht ist.

8. Elektroinstallationsgerät nach einem der Ansprüche 2 bis 6, **dadurch gekennzeichnet, dass** mehrere Fingerabdruckleser (30) auf der Wippe (40) angeordnet sind.

9. Elektroinstallationsgerät nach einem der Ansprüche 2 bis 7, **dadurch gekennzeichnet, dass** der Fingerabdruckleser (30) feststehend im mittleren Bereich einer beweglichen Wippe (41) angebracht ist.

10. Elektroinstallationsgerät nach einem der Ansprüche 1 bis 6, **dadurch gekennzeichnet, dass** das Bedienteil (40) als Mehrfach- Tastsensor ausgeführt ist und in wenigstens einer der Tasten wenigstens ein Fingerabdruckleser (30) integriert ist.

11. Elektroinstallationsgerät nach einem der Ansprüche 1 bis 6, **dadurch gekennzeichnet, dass** das Bedienteil (40) als Drehschalter mit integriertem Drehgriff (60) ausgeführt ist, wobei der Fingerabdruckleser (30) auf dem Drehgriff (30) angeordnet ist.
